# EUROPEAN PATENT SPECIFICATION

(11) **EP 2 753 487 B1**
(45) Date of publication and mention of the grant of the patent: **08.11.2017**
(21) Application number: 12778144.1
(22) Date of filing: 07.09.2012
(51) Int. Cl.: B60K 37/02, B60K 31/00, B60K 31/18, B60W 30/16, G01D 7/04, G01D 13/22, G01D 13/24, G01P 1/08, G01P 3/56, B60K 35/00, G01D 7/00, G01D 7/06, G01D 11/28, G09F 9/00

(54) **SPEED DISPLAYING DEVICE AND SPEED DISPLAYING METHOD**
GESCHWINDIGKEITSANZEIGEVORRICHTUNG UND GESCHWINDIGKEITSANZEIGEVERFAHREN
DISPOSITIF ET PROCÉDÉ D'AFFICHAGE DE VITESSE

(30) Priority: 07.09.2011 JP 2011195374
(43) Date of publication of application: 16.07.2014
(73) Proprietor: Yazaki Corporation, Minato-ku Tokyo 108-8333 (JP)
(72) Inventor: OISHI, Yukio, Shizuoka 427-8555 (JP)
(74) Representative: Grünecker Patent- und Rechtsanwälte PartG mbB
(86) International application number: PCT/JP2012/073551
(87) International publication number: WO 2013/035890

(56) References cited:
- DE-A1- 4 325 721
- DE-A1- 19 948 612
- JP-A- H11 245 686

## Description

### Technical Field

The invention relates to a speed displaying device and a speed displaying method which display a speedometer that indicates the speed of a vehicle.

### Background Art

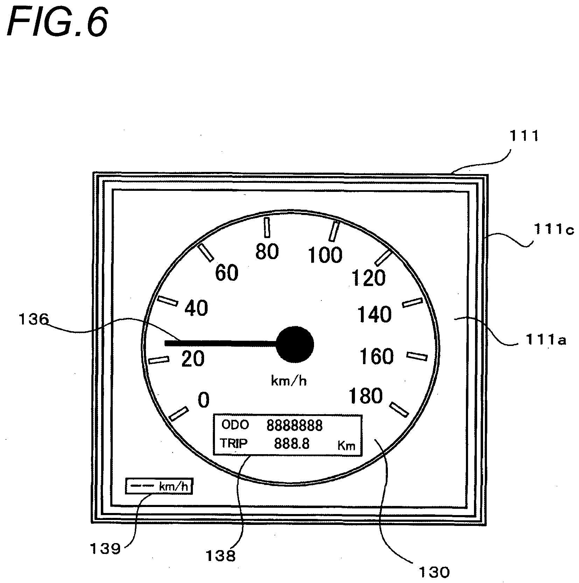

Conventionally, there is such kind of speed displaying device which displays a vehicle speed and a set speed on a meter which performs a graphic display at the time of automatic cruise traveling which makes an automobile to automatically run at the set speed. Fig. 6 is a view illustrating a display panel of the conventional speed displaying device. This display panel 111 has a TFT liquid crystal display (TFT-LCD) 111a in front of which a piece of front glass 111c is provided. A circular speedometer 130 is displayed on the screen of the display panel 111. A pointer 136 which indicates the speed of a vehicle is rotatably displayed on the speedometer 130.

An ODO/TRIP meter 138 which indicates a travel distance is displayed at the bottom of the speedometer 130. At the lower corner of the screen of the display panel 111, an automatic cruise setting part 139 which displays the set speed at the time of automatic cruise traveling is displayed.

However, when the vehicle speed deviates from the set speed in the display of a typical automatic cruise, it is necessary to compare a pointer position of the vehicle speed and a display position of the set speed, and the visibility is not preferable.

In contrast, a speed displaying device which displays the difference between the position of a pointer which indicates the vehicle speed and the position of a pointer which indicates the set speed as a region (refer to a Patent Literature 1 (JP-A-2000-118263) is known. Because the difference between the two pointers is displayed on the speed displaying device so that the difference can be grasped as the area of the region, it is easy to grasp the degree to which the vehicle speed is increased.

A speed displaying device or method comprising the features of the preamble of claims 1 and 4 is known from JP-A-11245685.

### Summary of Invention

### Technical Problem

However, in the above conventional speed displaying device, there are the following problems. The region which indicates the difference between the vehicle speed and the set speed is displayed while overlapping on marks or numbers on a dial face, the visibility is not preferable.

Further, because only the difference between the position of the pointer which indicates the vehicle speed and the position of the pointer which indicates the set speed is displayed merely as the region, it is hard to visually recognize whether the vehicle is accelerated or decelerated, and the target speed of the vehicle.

The present disclosure is made in view of the above problems, and the object of the invention is to provide a speed displaying device and a speed displaying method so that it is easy to visually recognize a region that is the difference between a set speed and a vehicle speed at the time of automatic cruise traveling.

Another object of the invention is to provide a speed displaying device and a speed displaying method so that it becomes easy to visually recognize whether a vehicle is accelerated or decelerated, and the target speed of the vehicle.

### Solution to Problem

In order to achieve the above described objects, the speed displaying device according to the present disclosure is characterized by the following: There is provided a speed displaying device which is provided in a vehicle that travels to reach a set target speed, and displays a speedometer which indicates a speed of the vehicle, the speed displaying device comprising:
a speedmeter having a scale; and
a controller that controls to display a pointer pointed position which indicates a position of current speed of the vehicle in the scale of the speedometer, a speed setting position which indicates a position of the target speed in the scale of the speedometer, and a speed difference region which indicates the size of the difference between the current speed and the target speed with an area on the speed meter,
wherein the speed difference region is displayed at a position near the scale of the speedometer.
The speed difference region is displayed at a position between the position of the current speed and the position of the target speed and at a position outside the scale. The speed difference region is displayed by changing luminosity or color in a range from the position of the current speed to the position of the target

The speed difference region is monochromatically displayed so that the density of the monochromatic display becomes high in parts near the speed setting position, and the density of the monochromatic display becomes low in parts near the pointer pointed position.

For example, the speed difference region is displayed so as to be changed based on whether the difference between the current speed and the target speed is plus or minus.

For example, the displays of the position of the current speed, the position of the target speed and the speed difference region are eliminated when the mode in which the vehicle travels to reach the target speed is released.

In order to achieve the above described objects, the speed displaying method according to the present disclosure is characterized by the following. There is provided a speed displaying method which is performed by a speed displaying device provided in a vehicle travels to reach a set target speed, and displays a speedometer which indicates a speed of the vehicle, the speed displaying method comprising:
a current speed displaying step of displaying a position of current speed of the vehicle in a scale of the speedometer;
a target speed displaying step of displaying a position of the target speed in the scale of the speedometer; and
a region displaying step of displaying a speed difference region which indicates the size of the difference between the current speed and the target speed with an area at a position near the scale of the speedometer.
In the region displaying step, the speed difference region is displayed at a position between the position of the current speed and the position of the target speed and at a position outside the scale. In the region displaying step, the speed difference region is displayed by changing luminosity or color in a range from the position of the current speed to the position of the target

The speed difference region is monochromatically displayed so that the density of the monochromatic display becomes high in parts near the speed setting position, and the density of the monochromatic display becomes low in parts near the pointer pointed position.

For example, in the region displaying step, the speed difference region is displayed so as to be changed based on whether the difference between the current speed and the target speed is plus or minus. For example, the speed displaying method further comprises:
a display eliminating step of eliminating the displays of the position of the current speed, the position of the target speed and the speed difference region when the mode in which the vehicle travels to reach the target speed is released.

### Advantageous Effects of Invention

According to the speed displaying device of the compositions of the above (1) to (5) and the speed displaying method of the steps of the above (6) to (10), because the speed difference region which indicates the size of the difference between the current speed and the target speed with an area is displayed at a position near the scale of the speedometer, it is easy to visually recognize the region that is the difference between the set speed and the vehicle speed at the time of automatic cruise traveling. Besides, it becomes easy to visually recognize whether the vehicle is accelerated or decelerated, and the target speed of the vehicle.

According to the speed displaying device and the speed displaying method of the present disclosure, because the speed difference region which indicates the size of the difference between the current speed and the target speed with an area is displayed at a position near the scale of the speedometer, it is easy to visually recognize the region that is the difference between the set speed and the vehicle speed at the time of automatic cruise traveling. Besides, it becomes easy to visually recognize whether the vehicle is accelerated or decelerated, and the target speed of the vehicle.

### Brief Description of Drawings

Fig. 1 is a view which illustrates the composition of a digital speedometer 1 that is a speed displaying device in an embodiment.
Fig. 2 is a view which illustrates a screen of a display panel 11.
Figs. 3A and 3B are views which illustrate zone regions 45 that are displayed when a vehicle is being accelerated or decelerated.
Fig. 4 is a flow chart which illustrates the procedures of meter displaying actions at the time of automatic cruise traveling.
Figs. 5A to 5C are views which illustrate zone regions that are displayed in various forms.
Fig. 6 is a view which illustrates a display panel of a conventional speed displaying device.

### Description of Embodiments

A speed displaying device and a speed displaying method in the embodiment of the present disclosure are described using the figures. The speed displaying device of the embodiment is carried in a vehicle, and is applied to a digital speedometer that performs a graphic display.

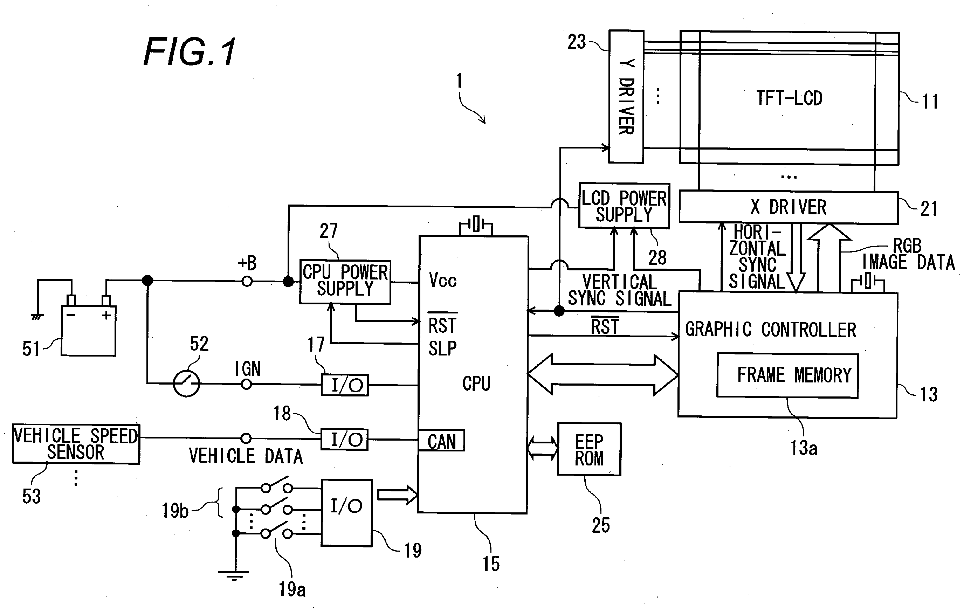

Fig. 1 is a view which illustrates the composition of a digital speedometer 1 that is the speed displaying device in the embodiment. The digital speedometer 1 has a display panel 11 which is a part of a meter panel of the vehicle, a graphic controller 13, a CPU (controller) 15, and various I/O interfaces 17, 18 and 19 which are connected to the CPU 15.

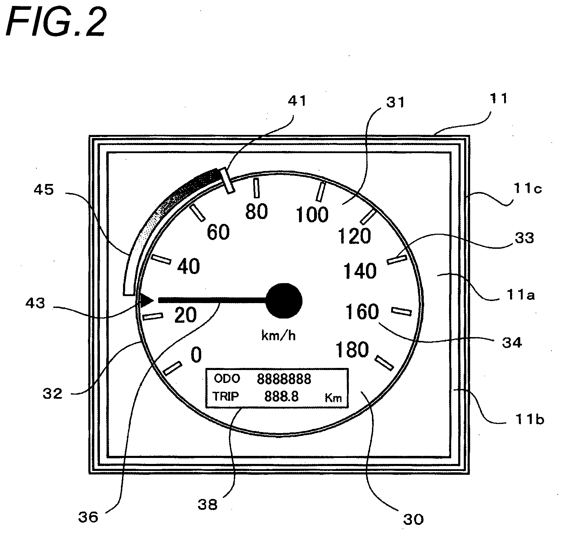

The display panel 11 has a TFT liquid crystal display (TFT-LCD) 11a which performs the graphic display, and a front glass 11c which is provided in front of the TFT-LCD 11a by sandwiching an inside part 11b (refer to Fig. 2). The display panel 11 is driven by an X driver 21 which applies a voltage in response to a horizontal sync signal and a Y driver 23 which applies a voltage in response to a vertical sync signal.

The graphic controller 13 has a frame memory 13a where various image data including a speedometer to be described below are stored, and transmits the image data stored in the frame memory 13a to the display panel 11. The graphic controller 13 outputs the horizontal sync signal to the X driver 21 and outputs the vertical sync signal to the Y driver 23.

An EEPROM 25 is attached to the CPU 15. The CPU 15 executes a program of meter displaying actions to be described below which is stored in the EEPROM 25, generates image data such as the speedometer which is displayed on the display panel 11, and transmits to the graphic controller 13.

An ignition switch (IGN) 52, which is connected to the plus terminal (+) of a battery 51, is connected to the I/O interface 17, and the ON/OFF of the ignition switch 52 is input into the I/O interface 17. Various sensors including a vehicle speed sensor 53 are connected to the I/O interface 18, and data such as vehicle speed and engine revolution number are input into the I/O interface 18 as vehicle data. Various switches, which include an automatic cruise setting switch 19a that sets an automatic cruise traveling mode to ON or OFF and speed setting keys 19b, are connected to the I/O interface 19. The set speed (target speed) at the time of the automatic cruise traveling is set by the speed setting keys 19b, and is temporarily stored in a RAM (not shown in the figure) of the CPU 15.

Electrical power from a CPU power supply 27 which is connected to the battery 51 is supplied to the CPU 15. Likewise, electrical power from a LCD power supply 28 which is connected to battery 51 is supplied to the display panel 11.

Fig. 2 is a view which illustrates a screen of the display panel 11. A speedometer 30 is displayed on the display panel 11. The speedometer 30 includes a dial face 31 which has a circular scale 32, marks 33 which are arranged inside the scale 32, numerical values 34 which indicate values of the marks 33, a pointer 36 which indicates a current speed, and an ODO/TRIP meter 38 which indicates an accumulated traveling distance and a traveling distance.

The marks 33 are divided by 20km/h in a range from 0km/h to 180km/h. The pointer 36 indicates the speed of the vehicle, and rotates around the center of the dial face 31. An ODO (accumulated traveling distance) and a TRIP (traveling distance) are displayed on the ODO/TRIP meter 38 in two sections.

Like the marks 33, a speed setting position 41 which indicates the set speed at the time of the automatic cruise traveling and a pointer pointed position 43 which indicates the current speed of the vehicle are displayed on the scale 32 with corresponding marks. The speed setting position 41 is expressed with a rectangle, and the pointer pointed position 43 is expressed with a triangle. A zone region 45 (speed difference region) is displayed between the speed setting position 41 and the pointer pointed position 43, and at a position near and along the circumference of the scale 32.

The zone region 45 has an area which corresponds to the difference between the vehicle speed and the set speed, and has a fan-like shape whose arc length is different in accordance with the difference between the vehicle speed and the set speed.

The zone region 45 is monochromatically displayed so that the density of the monochromatic display becomes high in parts near the speed setting position 41, and the density of the monochromatic display becomes low in parts near the pointer pointed position 43. Thereby, in the case of Fig. 2, it can be easily to recognize an acceleration direction and how much acceleration is needed.

Depending on whether the pointer pointed position 43 is greater or smaller than the speed setting position 41, the hue (color) of the zone region 45 changes. That is to say, the hue of the zone region 45 changes with the plus or minus of the difference between the current speed and the target speed. For example, when the pointer pointed position 43 is greater than the speed setting position 41, the zone region is displayed in blue, and when the pointer pointed position 43 is smaller than the speed setting position 41, the zone region 45 is displayed in red. Thus, by changing the hue of the zone region 45, it becomes easy to judge whether the vehicle is being accelerated or decelerated.

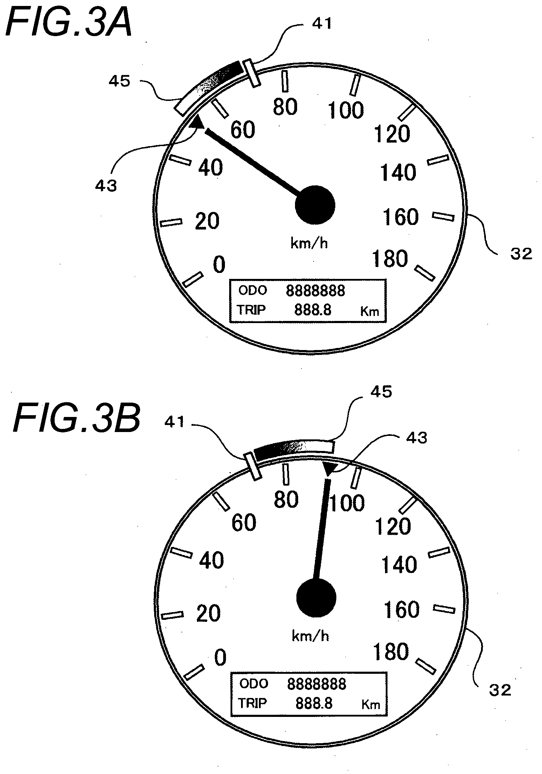

Fig. 3 is a view which illustrates zone regions 45 that are displayed when the vehicle is being accelerated or decelerated. Same as Fig. 2, in Fig. 3A, a zone region 45 that is displayed when the current speed of the vehicle does not reach the set speed and is being accelerated is shown. On the other hand, in Fig. 3B, a zone region 45 that is displayed when the current speed of the vehicle surpasses the set speed and is being decelerated is shown.

Thus, by displaying the zone region 45 at the left side of the speed setting position 41 or the right side of the speed setting position, it is known whether the vehicle is being accelerated or decelerated. Because those parts among the zone region 45 which is near the speed setting position 41 are displayed densely, by recognizing those dense parts in the zone region 45, it is easy to visually recognize not only whether the vehicle is being accelerated or decelerated, but also the target speed of the vehicle.

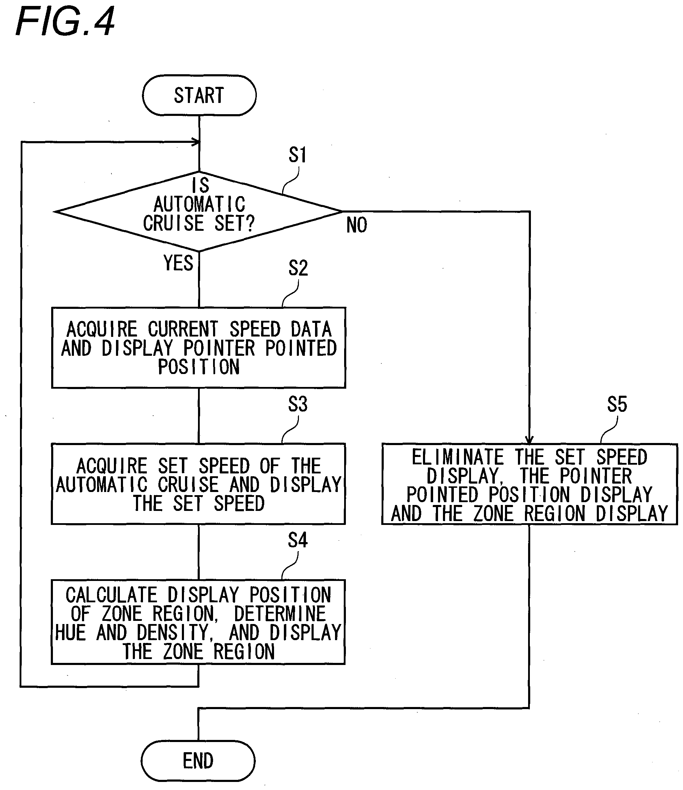

Displaying actions of the digital speedometer 1 having the above composition are shown. Fig. 4 is a flow chart which illustrates the procedures of meter displaying actions at the time of automatic cruise traveling. The action program is stored in the EEPROM 25 as previously described, and executed by the CPU 15.

The CPU 15 determines whether an automatic cruise is set by the automatic cruise setting switch 19a (Step S1).

When the automatic cruise is set, the CPU 15 acquires current speed data, and makes the pointer pointed position 43 to be displayed on the speedometer 30 displayed on the display panel 11 (Step S2). The process of this S2 is equivalent to a current speed displaying step.

The CPU acquires a set speed which is input by the speed setting keys 19b, stores the set speed in a built-in RAM, and makes the speed setting position 41 to be displayed on the speedometer 30 displayed on the display panel 11 (Step S3). The process of this S3 is equivalent to a target speed displaying step.

Based on the difference between the current vehicle speed and the set speed, the CPU 15 calculates a display position and a size of the zone region 45, determines a hue (color) and density (luminosity) of the zone region 45, and makes the zone region 45 to be displayed at the circumference of the scale 32 (Step S4). The process of this S4 is equivalent to a region displaying step.

After this, the CPU 15 returns to the process of Step S1. In the display of the zone region 45, as described above, in those parts near the speed setting position 41, the density of the monochromatic display becomes high. In the case of color display, the visibility can be improved, for example, by making those parts near the speed setting position 41 to be a hue tinged with red.

On the other hand, when the automatic cruise is not set in Step S1, the CPU 15 eliminates (wipes out) the pointer pointed position 43, the speed setting position 41 and the zone region 45 (Step S5), and the actions are terminated. The process of this S5 is equivalent to a display removing step.

Thus, according to the speed displaying device of the present disclosure, because the zone region is displayed at a position near the scale of the speedometer, it is easy to visually recognize the zone region at the time of automatic cruise traveling. Besides, it becomes easy to visually recognize whether the vehicle is accelerated or decelerated, and the target speed of the vehicle.

The zone region is displayed at a position outside the scale between the position (pointer pointed position) of the current speed and the position (speed setting position) of the target speed. Thus, it is easy to recognize a speed difference at a glance.

Because the zone region is so displayed that the plus and the minus of the speed difference between the current speed and the target speed are different, it is known whether the vehicle is being accelerated or decelerated.

The zone region is displayed by changing the luminosity or color in a range from the pointer pointed position to the speed setting position. Thus, the size and the direction of the speed difference are visually recognized intuitively.

When the automatic cruise traveling mode is released, the displays of the pointer pointed position, the speed setting position and the zone region are eliminated. Thus, the display except the automatic cruise traveling mode can be easily known.

The present disclosure is not limited to the compositions of the above embodiment, and any kind of compositions are applicable as long as the functions that the compositions of the embodiment have can be achieved.

For example, in the above embodiment, the zone region is formed to a fan shape, and those parts near the set speed are displayed densely, but the invention is not limited to these, and the zone region can be displayed in various forms.

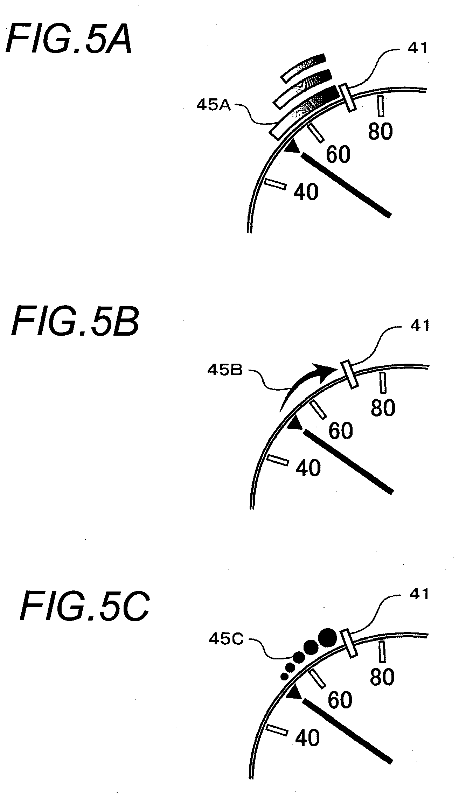

Fig. 5 is a view which illustrates zone regions that are displayed in the various forms. In Fig. 5A, the shape of a zone region 45A is fan-like, and the width increases as the difference between the set speed and the vehicle speed increases. Thereby, when the difference between two speeds is big, it is easy to visually recognize the difference.

In Fig. 5B, the shape of a zone region 45B is indicated with an arrow along the circumference. Because the front end of the arrow faces the speed setting position side, it becomes clear at a glance whether the vehicle is being accelerated or decelerated without attaching density.

In Fig. 5C, the shape of a zone region 45C is displayed with a plurality of dots (round points). In this case, because the sizes of those dots near the set speed are larger, like the case of the arrow, it is known whether the vehicle is being accelerated or decelerated without attaching density.

The present application is based on Japanese Patent Application No. 2011-195374 filed on September 7, 2011.

### Industrial Applicability

The present disclosure is useful in that when the speedometer is displayed, it is easy to visually recognize the zone region at the time of automatic cruise traveling.

### Reference Signs List

- 1: digital speedometer
- 11: display panel
- 13: graphic controller
- 13a: frame memory
- 15: CPU
- 17,18,19: I/O interfaces
- 19a: automatic cruise setting switch
- 19b: speed setting keys
- 21: X driver
- 23: Y driver
- 25: EEPROM
- 27: CPU power supply
- 28: LCD power supply
- 30: speedometer
- 31: dial face
- 32: scale
- 33: marks
- 36: pointer
- 38: ODO/TRIP meter
- 41: speed setting position
- 43: pointer pointed position
- 45: zone region
- 51: battery
- 52: ignition switch (IGN)
- 53: vehicle speed sensor

## Claims

1. A speed displaying device which is provided in a vehicle that travels to reach a set target speed, and displays a speedometer (30) which indicates a speed of the vehicle, the speed displaying device (1) comprising:
a speedometer (30) having a scale (32); and
a controller (15) that controls to display a pointer pointed position (43) which indicates a position of current speed of the vehicle in the scale (32) of the speedometer (30), a speed setting position (41) which indicates a position of the target speed in the scale (32) of the speedometer (30), and a speed difference region (45) which indicates the size of the difference between the current speed and the target speed with an area on the speedometer (30),
wherein the speed difference region (45) is displayed at a position near the scale (32) of the speedometer (30),
wherein the speed difference region (45) is displayed at a position between the position of the current speed and the position of the target speed and at a position outside the scale (32),
wherein the speed difference region (45) is displayed by changing luminosity in a range from the position of the current speed to the position of the target speed, **characterized in that** the speed difference region (45) is monochromatically displayed so that the density of the monochromatic display becomes high in parts near the speed setting position (41), and the density of the monochromatic display becomes low in parts near the pointer pointed position (43).

2. The speed displaying device according to claim 1, wherein the speed difference region (45) is displayed so as to be changed based on whether the difference between the current speed and the target speed is plus or minus.

3. The speed displaying device according to claim 1 or 2, wherein the displays of the position (43) of the current speed, the position (41) of the target speed and the speed difference region (45) are eliminated when the mode in which the vehicle travels to reach the target speed is released.

4. A speed displaying method which is performed by a speed displaying device (1) provided in a vehicle travels to reach a set target speed, and displays a speedometer (30) which indicates a speed of the vehicle, the speed displaying method comprising:
a current speed displaying step of displaying a position of current speed of the vehicle in a scale (32) of the speedometer (30);
a target speed displaying step of displaying a position of the target speed in the scale (32) of the speedometer (30); and
a region displaying step of displaying a speed difference region (45) which indicates the size of the difference between the current speed and the target speed with an area at a position near the scale (32) of the speedometer (30),
wherein in the region displaying step, the speed difference region (45) is displayed at a position between the position of the current speed and the position of the target speed and at a position outside the scale (32),
wherein in the region displaying step, the speed difference region (45) is displayed by changing luminosity in a range from the position of the current speed to the position of the target speed, **characterized in that** the speed difference region (45) is monochromatically displayed so that the density of the monochromatic display becomes high in parts near the speed setting position (41), and the density of the monochromatic display becomes low in parts near the pointer pointed position (43).

5. The speed displaying method according to claim 4, wherein in the region displaying step, the speed difference region (45) is displayed so as to be changed based on whether the difference between the current speed and the target speed is plus or minus.

6. The speed displaying method according to claim 4 or 5, further comprising:
a display eliminating step of eliminating the displays of the position (43) of the current speed, the position (41) of the target speed and the speed difference region (45) when the mode in which the vehicle travels to reach the target speed is released.

## Patentansprüche

1. Geschwindigkeitsanzeigevorrichtung, die in einem Fahrzeug angeordnet ist, das mit dem Ziel fährt, eine eingestellte Zielgeschwindigkeit zu erreichen, und die einen Tachometer (30) anzeigt, der eine Geschwindigkeit des Fahrzeugs anzeigt, wobei die Geschwindigkeitsanzeigevorrichtung (1) umfasst:
einen Tachometer (30) mit einer Skala (32); und
eine Steuerung (15), die eine Steuerung zur Anzeige einer Zeigerzeigeposition (43) durchführt, die eine Position einer aktuellen Geschwindigkeit des Fahrzeugs auf der Skala (32) des Tachometers (30) anzeigt, eine Geschwindigkeitseinstellungsposition (41), die eine Position der Zielgeschwindigkeit auf der Skala (32) des Tachometers (30) anzeigt, und einen Geschwindigkeitsreferenzbereich (45), der die Größe der Differenz zwischen der aktuellen Geschwindigkeit und der Zielgeschwindigkeit in einem Bereich des Tachometers (30) anzeigt,
wobei der Geschwindigkeitsdifferenzbereich (45) auf einer Position nahe der Skala (32) des Tachometers (30) angezeigt wird,
wobei der Geschwindigkeitsdifferenzbereich (45) auf einer Position zwischen der Position der aktuellen Geschwindigkeit und der Position der Zielgeschwindigkeit und auf einer Position außerhalb der Skala (32) angezeigt wird,
wobei der Geschwindigkeitsdifferenzbereich (45) durch Ändern der Leuchtstärke in einem Bereich ab der Position der aktuellen Geschwindigkeit bis zu der Position der Zielgeschwindigkeit angezeigt wird,
**dadurch gekennzeichnet, dass**
der Geschwindigkeitsdifferenzbereich (45) monochromatisch angezeigt wird, so dass die Dichte der monochromatischen Anzeige in Teilen nahe der Geschwindigkeitseinstellungsposition (41) hoch wird, und die Dichte der monochromatischen Anzeige in Teilen nahe der Zeigerzeigeposition (43) niedrig wird.

2. Geschwindigkeitsanzeigevorrichtung nach Anspruch 1, wobei der Geschwindigkeitsdifferenzbereich (45) so angezeigt wird, dass er sich basierend darauf ändert, ob die Differenz zwischen der aktuellen Geschwindigkeit und der Zielgeschwindigkeit plus oder minus ist.

3. Geschwindigkeitsanzeigevorrichtung nach Anspruch 1 oder 2, wobei die Anzeige der Position (43) der aktuellen Geschwindigkeit, der Position (41) der Zielgeschwindigkeit und des Geschwindigkeitsdifferenzbereichs (45) gelöscht werden, wenn der Modus, in dem das Fahrzeug mit dem Ziel fährt, die Zielgeschwindigkeit zu erreichen, aufgehoben wird.

4. Geschwindigkeitsanzeigeverfahren, das in einem Fahrzeug von einer Geschwindigkeitsanzeigevorrichtung (1) durchgeführt wird, die in einem Fahrzeug angeordnet ist, das mit dem Ziel fährt, eine eingestellte Zielgeschwindigkeit zu erreichen, und die einen Tachometer (30) anzeigt, der eine Geschwindigkeit des Fahrzeugs anzeigt, wobei das Geschwindigkeitsanzeigeverfahren (1) umfasst:
einen Anzeigeschritt der aktuellen Geschwindigkeit zum Anzeigen einer Position der aktuellen Geschwindigkeit des Fahrzeugs auf einer Skala (32) des Tachometers (30);
einen Anzeigeschritt der Zielgeschwindigkeit zum Anzeigen einer Position der Zielgeschwindigkeit auf der Skala (32) des Tachometers (30); und
einen Bereichsanzeigeschritt zum Anzeigen eines Geschwindigkeitsreferenzbereichs (45), der die Größe der Differenz zwischen der aktuellen Geschwindigkeit und der Zielgeschwindigkeit in einem Bereich auf einer Position nahe der Skala (32) des Tachometers (30) anzeigt,
wobei der Geschwindigkeitsdifferenzbereich (45) in dem Bereichsanzeigeschritt auf einer Position zwischen der Position der aktuellen Geschwindigkeit und der Position der Zielgeschwindigkeit und auf einer Position außerhalb der Skala (32) angezeigt wird,
wobei der Geschwindigkeitsdifferenzbereich (45) in dem Bereichsanzeigeschritt durch Ändern der Leuchtstärke in einem Bereich ab der Position der aktuellen Geschwindigkeit bis zu der Position der Zielgeschwindigkeit angezeigt wird,
**dadurch gekennzeichnet, dass**
der Geschwindigkeitsdifferenzbereich (45) monochromatisch angezeigt wird, so dass die Dichte der monochromatischen Anzeige in Teilen nahe der Geschwindigkeitseinstellungsposition (41) hoch wird, und die Dichte der monochromatischen Anzeige in Teilen nahe der Zeigerzeigeposition (43) niedrig wird.

5. Geschwindigkeitsanzeigeverfahren nach Anspruch 4, wobei der Geschwindigkeitsdifferenzbereich (45) in dem Bereichsanzeigeschritt so angezeigt wird, dass er sich basierend darauf ändert, ob die Differenz zwischen der aktuellen Geschwindigkeit und der Zielgeschwindigkeit plus oder minus ist.

6. Geschwindigkeitsanzeigeverfahren nach Anspruch 4 oder 5, des Weiteren umfassend:
einen Anzeigeausschaltungsschritt zum Löschen der Anzeige der Position (43) der aktuellen Geschwindigkeit, der Position (41) der Zielgeschwindigkeit und des Geschwindigkeitsdifferenzbereichs (45), wenn der Modus, in dem das Fahrzeug mit dem Ziel fährt, die Zielgeschwindigkeit zu erreichen, aufgehoben wird.

## Revendications

1. Dispositif d'affichage de vitesse qui est prévu dans un véhicule en mouvement pour atteindre une vitesse cible définie, et qui présente un compteur (30) indiquant une vitesse du véhicule, le dispositif d'affichage de vitesse (1) comprenant:
un compteur (30) présentant une graduation (32); et
un système de commande (15) qui commande l'affichage d'une position de l'aiguille (43) qui indique une position de la vitesse actuelle du véhicule dans la graduation (32) du compteur (30), une position de réglage de vitesse (41) qui indique une position de la vitesse cible dans la graduation (32) du compteur (30) et une zone de différence de vitesse (45) qui indique l'ampleur de la différence entre la vitesse actuelle et la vitesse cible sur une zone du compteur (30),
dans lequel la zone de différence de vitesse (45) est affichée à une position proche de la graduation (32) du compteur (30),
dans lequel la zone de différence de vitesse (45) est affichée à une position entre la position de la vitesse actuelle et la position de la vitesse cible et à une position en dehors de la graduation (32),
dans lequel la zone de différence de vitesse (45) est affichée en changeant de luminosité dans une plage allant de la position de la vitesse actuelle à la position de la vitesse cible, **caractérisé en ce que**
la zone de différence de vitesse (45) est affichée de façon monochromatique, de sorte que la densité de l'affichage monochromatique devient élevée dans des endroits proches de la position de réglage de la vitesse (41) et la densité de l'affichage monochromatique devient faible dans des endroits proches de la position de l'aiguille (43).

2. Dispositif d'affichage de vitesse selon la revendication 1, dans lequel la zone de différence de vitesse (45) est affichée pour être modifiée selon que la différence entre la vitesse actuelle et la vitesse cible est positive ou négative.

3. Dispositif d'affichage de vitesse selon les revendications 1 ou 2, dans lequel l'affichage de la position (43) de la vitesse actuelle, de la position (41) de la vitesse cible et de la zone de différence de vitesse (45) disparaît au terme du mode dans lequel le véhicule atteint la vitesse cible.

4. Procédé d'affichage de vitesse faisant appel à un dispositif d'affichage de vitesse (1) prévu dans un véhicule en mouvement pour atteindre une vitesse cible définie, et qui présente un compteur (30) indiquant une vitesse du véhicule, le procédé d'affichage de vitesse comprenant:
une étape d'affichage de la vitesse actuelle permettant d'afficher une position de la vitesse actuelle du véhicule dans une graduation (32) du compteur (30);
une étape d'affichage de la vitesse cible permettant d'afficher une position de la vitesse cible du véhicule dans une graduation (32) du compteur (30); et
une étape d'affichage de la zone permettant d'afficher une zone de différence de vitesse (45) qui indique l'ampleur de la différence entre la vitesse actuelle et la vitesse cible avec une zone située à proximité de la graduation (32) du compteur (30),
dans lequel, à l'étape d'affichage de zone, la zone de différence de vitesse (45) est affichée à une position entre la position de la vitesse actuelle et la position de la vitesse cible et à une position en dehors de la graduation (32),
dans lequel, à l'étape d'affichage de zone, la zone de différence de vitesse (45) est affichée en changeant de luminosité dans une plage allant de la position de la vitesse actuelle à la position de la vitesse cible, **caractérisé en ce que**
la zone de différence de vitesse (45) est affichée de façon monochromatique, de sorte que la densité de l'affichage monochromatique devient élevée dans des endroits proches de la position de réglage de la vitesse (41) et la densité de l'affichage monochromatique devient faible dans des endroits proches de la position de l'aiguille (43).

5. Procédé d'affichage de vitesse selon la revendication 4, dans lequel, à l'étape d'affichage de zone, la zone de différence de vitesse (45) est affichée pour être modifiée selon que la différence entre la vitesse actuelle et la vitesse cible est positive ou négative.

6. Procédé selon la revendication 4 ou la revendication 5, comprenant en outre:
une étape de suppression de l'affichage, permettant de supprimer l'affichage de la position (43) de la vitesse actuelle, la position (41) de la vitesse cible et la zone de différence de vitesse (45) au terme du mode dans lequel le véhicule atteint la vitesse cible.
